# EUROPÄISCHE PATENTSCHRIFT

(11) **EP 3 145 612 B1**
(45) Veröffentlichungstag und Bekanntmachung des Hinweises auf die Patenterteilung: **20.11.2019**
(21) Anmeldenummer: 15722073.2
(22) Anmeldetag: 15.05.2015
(51) Int. Cl.: B01D 29/23

(54) **FILTERVORRICHTUNG**
FILTER DEVICE
DISPOSITIF FILTRE

(30) Priorität: 17.05.2014 DE 102014007312
(43) Veröffentlichungstag der Anmeldung: 29.03.2017
(73) Patentinhaber: HYDAC FluidCareCenter GmbH, 66280 Sulzbach/Saar (DE)
(72) Erfinder: KREIBIG, Micha, 66780 Rehlingen-Siersburg (DE)
(74) Vertreter: Bartels und Partner, Patentanwälte
(86) Internationale Anmeldenummer: PCT/EP2015/001010
(87) Internationale Veröffentlichungsnummer: WO 2015/176811

(56) Entgegenhaltungen:
- EP-A1- 1 306 117
- EP-A1- 1 388 360
- DE-A1- 4 322 226

## Beschreibung

Die Erfindung betrifft eine Filtervorrichtung mit den Merkmalen im Oberbegriff von Anspruch 1.

Filtervorrichtungen dieser Gattung (DE 10 2007 046 208 A1) sind in den verschiedensten Bauformen, Abmessungen, Filtereigenschaften und weiteren Spezifikationen Stand der Technik und kommen auf den verschiedensten Gebieten zur Filterung von Fluiden unterschiedlicher Art zum Einsatz. Bei einem Einsatz zur Filterung von Betriebsmitteln für technische Gerätschaften, beispielsweise Hydraulikflüssigkeiten, Kraft- oder Schmierstoffe, Kühlflüssigkeiten und dergleichen, sind die Filtervorrichtungen oft an Stellen eingebaut, an denen sie im Betrieb Vibrationsbelastungen ausgesetzt sind. Dies ist namentlich der Fall, wenn Filtervorrichtungen bei mobilen Arbeitsgerätschaften zum Einsatz kommen, wie Bagger, Schaufellader, Mobilkrane, Stapler und dergleichen. Durch am Filterelement wirksame Vibrationen kann es zu einer Destabilisierung des jeweiligen Filtermediums kommen, was zu einer Beeinträchtigung der Filterleistung führt.

Die DE 43 22 226 A1 beschreibt eine Filtervorrichtung, mit einem Filtergehäuse, das ein Filterelement aufnimmt, das innerhalb des Filtergehäuses einen Unfiltrat- von einem Filtratraum trennt, wobei das Filterelement gegenüber dem Filtergehäuse mittels einer Dichteinrichtung abgedichtet ist, wobei das Filterelement ausschließlich mittels Loslagern innerhalb des Filtergehäuses gelagert ist, wobei der Dichtring, der das erste Loslager mit bildet, zwischen einer Anschluss-Stelle des Filterelements und einem Kopf des Filtergehäuses angeordnet ist.

Weitere Filtervorrichtungen gehen aus der EP 1 306 117 A1 und der EP 1 388 360 A1 hervor.

Im Hinblick auf diese Problematik stellt sich die Erfindung die Aufgabe, eine Filtervorrichtung zur Verfügung zu stellen, die sich durch eine erhöhte Widerstandsfähigkeit gegen Beeinträchtigungen durch Vibrationen auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der Dichtring, der das zweite Loslager mit bildet, zwischen dem genannten Filterkopf und einem Filtertopf des Filtergehäuses angeordnet ist. Dadurch ist in der Gesamtverbindung zwischen Filterelement und Filtertopf des Gehäuses, die durch das Loslager zwischen Filterelement und Filtergehäusekopf und über das zwischen dem Filtergehäusekopf und dem Filtergehäusetopf durch das Festleger gebildet ist, jeweils ein elastomeres Lagerelement vorhanden, so dass eine gute vibrationsdämpfende Wirkung der gebildeten Lagerung erreichbar ist.

Ferner ist vorgesehen, dass das Filterelement ausschließlich mittels Loslagern innerhalb des Filtergehäuses gelagert ist. Die erfindungsgemäß vorgesehene Kombination von teilbeweglichen Lagerstellen ermöglicht eine vibrationsgedämpfte Lagerung des Filterelements und damit eine Verbesserung der Betriebssicherheit der unter Vibrationsbelastungen stehenden Filtervorrichtung.

Eine besonders effektive Vibrationsdämpfung lässt sich durch die Lagerung erreichen, wenn die Lager vorrangig in zueinander senkrechten Richtungen wirken, wobei ein erstes Loslager im Betrieb der Vorrichtung vorrangig in horizontaler radialer Richtung wirkt und ein zweites Loslager in vertikaler, axialer Richtung.

In besonders vorteilhafter Weise kann das jeweilige Lager einen Dichtring der Dichteinrichtung aufweisen, mittels dem das Filterelement gegenüber dem Filtergehäuse abgedichtet ist.

Besonders günstige Verhältnisse hinsichtlich der Vibrationsdämpfung ergeben sich, wenn der jeweilige, das Lager mit ausbildende Dichtring elastisch nachgiebig ist, vorzugsweise aus einem elastomeren Material besteht.

Bei besonders vorteilhaften Ausführungsbeispielen weist die eine Endkappe des Filterelements, die die Anschlussstelle bildet, eine den Filtertopf übergreifende Abstützfläche auf, die mit zunehmender Verbindung von Filterkopf mit Filtertopf den vorrangig in vertikaler Richtung wirkenden Lager-Dichtring gegen eine weitere Abstützfläche derart anlegt, dass dieser Dichtring sich in radialer Richtung gesehen verbreitert. Der derart verpresste, elastomere Dichtring bildet dadurch ein vorgespanntes Dämpferelement zwischen den Lagerflächen des Festlagers.

In besonders vorteilhafter Weise kann die Anordnung so getroffen sein, dass die weitere Abstützfläche für den zur Bildung des zweiten Loslagers eingesetzten Lager-Dichtring Bestandteil des Filtertopfes ist und dass die eine Abstützfläche einen geschlossenen Außenumfangsring ausbildet, der über Verbindungsstege mit den sonstigen Teilen der Endkappe verbunden ist und der außenumfangsseitig einen Absatz oberhalb des zweiten Loslagers aufweist. Dieser am Außenumfangsring der Endkappe befindliche Absatz ermöglicht das Verspannen des Dichtringes des zweiten Loslagers.

Der das erste Loslager mit ausbildende Dichtring kann in einer Umfangsnut eines zylindrischen Fortsatzes der Endkappe angeordnet sein, die die Anschlussstelle begrenzt und die in Anlage mit einem zylindrischen Anschlussteil des Filterkopfes bringbar ist. Dadurch bildet dieses Loslager gleichzeitig die Abdichtung des Fluiddurchgangs zwischen Anschlussstelle der Endkappe und dem Innenraum des Filterelements, in den der zylindrische Fortsatz einmündet und der beim Filtervorgang beispielsweise die Unfiltratseite bildet.

Zur Erreichung besonders guter Dämpfungseigenschaften ist der Durchmesser des Dichtrings, der das erste Loslager mit ausbildet, vorzugsweise kleiner als der Durchmesser des Dichtrings, der das zweite Loslager mit ausbildet, wobei beide Lager in axialer Richtung derart voneinander beabstandet sind, dass das Filterelement im Wesentlichen vibrationsfrei im Filtergehäuse gelagert ist.

Nachstehend ist die Erfindung anhand eines in der Zeichnung dargestellten Ausführungsbeispiels im Einzelnen erläutert. Es zeigen:

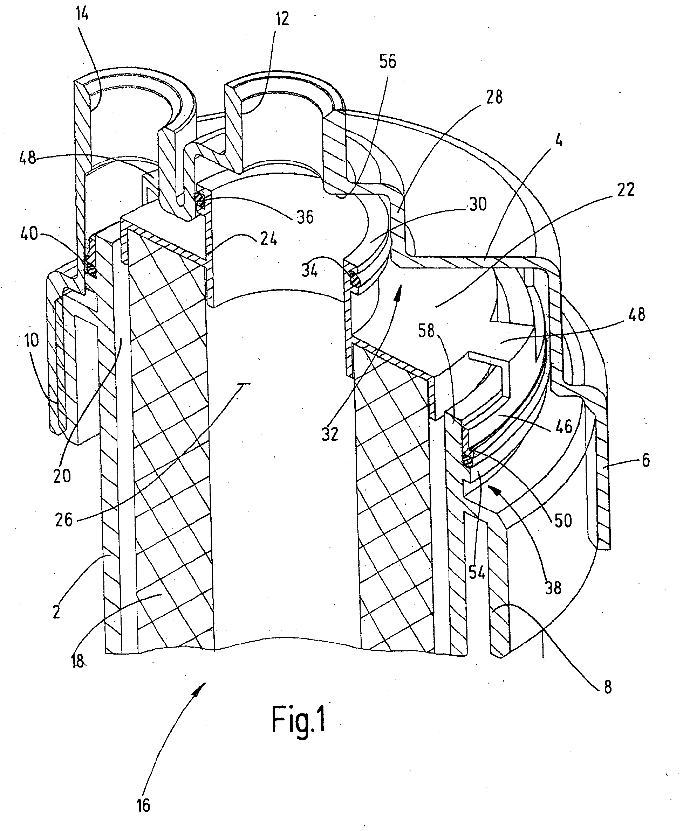

- Fig. 1: in perspektivischer Schrägansicht und mit unterschiedlichen Schnittebenen in Längsrichtung aufgeschnitten den oberen Teil eines Ausführungsbeispiels der erfindungsgemäßen Filtervorrichtung;

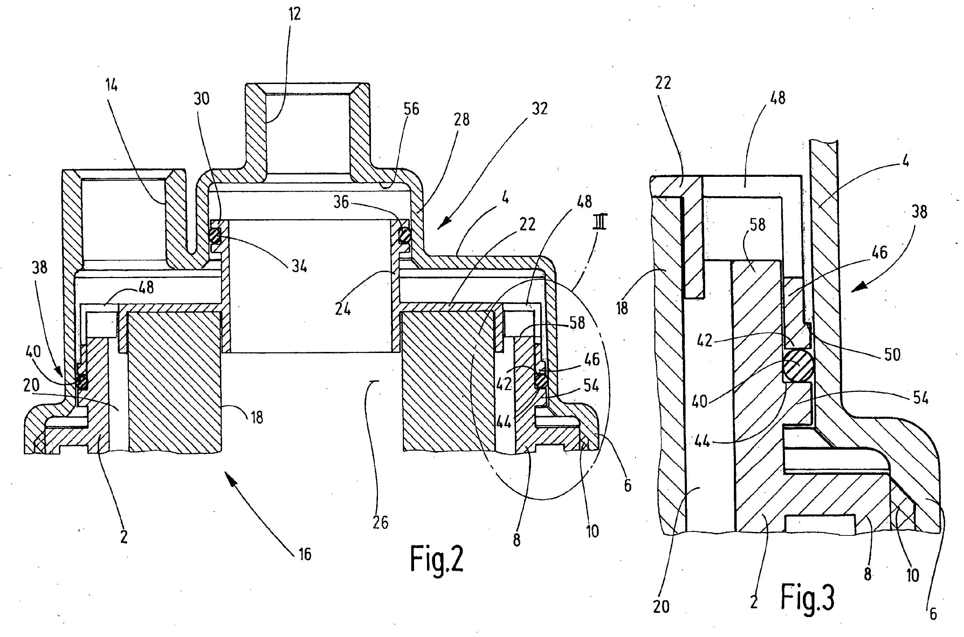

- Fig. 2: einen gegenüber Fig. 1 in geringfügig größerem Maßstab gezeichneten Längsschnitt des Ausführungsbeispiels, wobei ledig-lich der obere Vorrichtungsteil im Bereich des Filtergehäusekopfes dargestellt ist; und
- Fig. 3: eine vergrößerte Darstellung des in Fig. 2 mit III bezeichneten Bereichs.

Das in der Zeichnung dargestellte Ausführungsbeispiel der erfindungsgemäßen Filtervorrichtung weist ein Filtergehäuse in Form eines kreiszylinderförmigen Filtertopfes 2 auf, von dem in den Figuren lediglich der Bereich des oberen, offenen Endes dargestellt ist und der einen (nicht gezeigten) geschlossenen Topfboden aufweist. Der Filtertopf 2 ist am oberen Ende mittels eines eine Art Abschlussdeckel bildenden Filterkopfes 4 verschließbar, der mit einem hemdartig, axial vorspringenden Umfangsteil 6 einen Ringkörper 8 des Gehäusetopfes 2 übergreift. Der Ringkörper 8 bildet eine radiale Auskragung am Filtertopf 2. Für die Verbindung des Filterkopfes 4 mit dem Filtertopf 2 ist zwischen Umfangsteil 6 des Filterkopfes 4 und Ringkörper 8 des Filtertopfes 2 ein Schraubgewinde 10 ausgebildet. An der Oberseite des Filterkopfes 4 sind ein zur Zylinderachse koaxialer Fluideingang 12 für die Zufuhr von Unfiltrat sowie ein hierzu radial versetzt angeordneter Fluidausgang 14 für den Filtrataustritt vorgesehen.

Das im Filtertopf 2 aufnehmbare Filterelement 16 weist ein einen Hohlzylinder bildendes Filtermedium 18 auf, das in der bei derartigen Filterelementen üblichen Weise endseits jeweils von einer Endkappe eingefasst ist, von denen in den Figuren nur die dem Filterkopf 4 zugeordnete, obere Endkappe 22 sichtbar ist. Zur Bildung einer Anschlussstelle, über die das Filterelement 16 mit dem Fluideingang 12 verbindbar ist, weist die Endkappe 22 einen koaxialen, zylindrischen Fortsatz 24 auf, der bei am Filtertopf 2 angebrachtem Filterkopf 4 den Fluiddurchgang vom Fluideingang 12 zum inneren, vom Filtermedium 18 umgebenen Filterhohlraum 26 bildet. Aus dem Filterhohlraum 26, der im Betrieb den Unfiltratraum bildet, gelangt das Fluid nach Durchströmen des Filtermediums 18 in den an dessen Außenseite befindlichen Filtratraum 20 und von diesem zum Fluidausgang 14 des Filterkopfes.

Zur Bildung einer abgedichteten Verbindung zwischen dem die Anschlussstelle bildenden Fortsatz 24 der Endkappe 22 und dem Fluideingang 12 weist der Filterkopf 4 ein zylindrisches Anschlussteil 28 auf, das bei am Filtertopf 2 angebrachtem Filterkopf 4 den Rand 30 des Fortsatzes 24 übergreift. Zwischen diesem Rand 30 und dem Anschlussteil 28 ist für die Lagerung des Filterelements 16 eine erste Lagerstelle in Form eines Loslagers 32 gebildet. Diese Lagerung ist als "Loslager" bezeichnet, weil diese Lagerstelle eine Lagerung in horizontaler, radialer Richtung bildet, jedoch keine in vertikaler, axialer Richtung wirkenden Lagerflächen aufweist. Genauer gesagt weist das Loslager 32 eine Umfangsnut 34 im Bereich des Endrandes 30 des Fortsatzes 24 der Endkappe 32 auf, wobei ein in der Nut 34 sitzender Dichtring 36 zwischen dem Grund der Nut 34 und der Innenseite des zylindrischen Anschlussteils 28 des Filterkopfes 4 radial verpresst ist. Das Loslager 32 bildet somit über den Dichtring 36 sowohl die Abdichtung des Filterelements 16 als auch die in horizontaler Richtung wirkende Lagerung.

Das Filterelement 16 ist an dem am Filtergehäusekopf angebrachten Filterkopf 4 über eine zweite Lagerstelle in Form eines zweiten Loslagers 38 gelagert. Dieses weist, wie das erste Loslager 32, als Lagerungsbestandteil einen Dichtring 40 auf, so dass das Lager 38 gleichzeitig eine Abdichtung bildet. Die den Dichtring 40 aufweisende Lagerstelle ist hier als "Loslager" bezeichnet, weil bei mit dem Filtertopf 2 verbundenem Filterkopf 4, d.h. bei Festschrauben des Filterkopfes 4, der Dichtring 40 in vertikaler Richtung lediglich durch das Gewicht des Filterelements 16 zwischen einer ersten Abstützfläche 42, die sich an der Endkappe 22 befindet, und einer zweiten Abstützfläche 44 verspannt wird. Die erste Abstützfläche 42 befindet sich an einem Außenumfangsring 46, der als geschlossener Ringkörper den Hauptteil der Endkappe 22 in radialem Abstand umgibt und mit dem Hauptteil über sich radial erstreckende Verbindungsstege 48 verbunden ist. Für das vertikale, axiale Verpressen des Dichtringes 40 weist der Umfangsring 46 einen Absatz 50 in Form einer radial vorstehenden Ringrippe auf, die die erste Abstützfläche 42 bildet, die durch das Gewicht des Filterelements 16 den Dichtring 40 gegen die weitere Abstützfläche 44 verpresst. Die weitere Abstützfläche 44 befindet sich an einer am Filtergehäusetopf 2 radial vorspringenden Ringrippe 54. Durch das axiale Verpressen wird der Dichtring 40 in radialer Richtung geweitet, so dass sowohl eine Abdichtung als auch eine Lagerung gebildet ist, die in radialer Richtung zwischen Filtergehäusetopf 2 und Filtergehäusekopf 4 abdichtet. Genauer gesagt ist dadurch eine Abdichtung des Filtratraums 20 gegenüber der Außenseite des Filtergehäuses gebildet.

Dadurch, dass zwei Lagerstellen in axialem Abstand voneinander angeordnet sind, die beide Loslager 32, 38 ausbilden und Relativbewegungen in Axialrichtung ermöglichen, und dadurch, dass sowohl das Loslager 32 als auch das Loslager 38 als Lagerelement jeweils einen elastomeren Dichtring 36 bzw. 40 aufweisen, wirkt die Gesamtlagerung insgesamt vibrationsdämpfend und ermöglicht einen betriebssicheren Betrieb des Filterelements 16 bei im Betrieb auftretenden Vibrationsbelastungen. Wegen der gegen die Gewichtskraft möglichen Axialbewegung des Filterelements 16 bildet die an den Fluideingang 12 angrenzende innere Randfläche 56 des Anschlussteils 28 des Kopfes 4 eine Anschlagfläche für den Rand 30 des Fortsatzes 24 der Endkappe 22. Axialbewegungen sind dadurch auf eine Weglänge begrenzt, bei der sich der Umfangsring 46 der Endkappe 22 noch in einer den Rand 58 des Filtertopfes 2 übergreifenden Lage befindet. Bedingt durch die Loslager ist das Filterelement im Filtergehäuse "schwimmend" gelagert und kann sich in vertikaler Ausrichtung bei normaler Einbaulage der Gesamtfiltervorrichtung entsprechend selbstständig justieren, insbesondere im Filtrationsbetrieb durch den Fluiddruck in seine abdichtende Stellung gelangen.

## Patentansprüche

1. Filtervorrichtung, mit einem Filtergehäuse (2, 4), das ein Filterelement (16) aufnimmt, das innerhalb des Filtergehäuses (2, 4) einen Unfiltrat-(26) von einem Filtratraum (20) trennt, wobei das Filterelement (16) gegenüber dem Filtergehäuse (2, 4) mittels einer Dichteinrichtung (36, 40) abgedichtet ist, wobei das Filterelement (16) ausschließlich mittels Loslagern (32, 38) innerhalb des Filtergehäuses (2, 4) gelagert ist, das jeweilige Lager (32, 38) einen Dichtring (36, 40) der Dichteinrichtung aufweist, und wobei der Dichtring (36), der das erste Loslager (32) mit bildet, zwischen einer Anschluss-Stelle (24) des Filterelements (16) und einem Kopf (4) des Filtergehäuses (2, 4) angeordnet ist, **dadurch gekennzeichnet, dass** der Dichtring (40), der das zweite Loslager (38) mit bildet, zwischen dem genannten Filterkopf (4) und einem Filtertopf (2) des Filtergehäuses (2, 4) angeordnet ist.

2. Filtervorrichtung nach Anspruch 1, **dadurch gekennzeichnet, dass** die Lager (32, 38) vorrangig in zueinander senkrechten Richtungen wirken und dass ein erstes Loslager (32) im Betrieb der Vorrichtung vorrangig in horizontaler, radialer Richtung wirkt und ein zweites Loslager (38) in vertikaler, axialer Richtung.

3. Filtervorrichtung nach Anspruch 1 oder 2, **dadurch gekennzeichnet, dass** der jeweilige, das Lager (32, 38) mit ausbildende Dichtring (36, 40) elastisch nachgiebig ist, vorzugsweise aus einem elastomeren Material besteht.

4. Filtervorrichtung nach einem der vorstehenden Ansprüche, **dadurch gekennzeichnet, dass** die eine Endkappe (22) des Filterelements (16), die die Anschluss-Stelle (24) bildet, eine den Filtertopf (2) übergreifende Abstützfläche (42) aufweist, die mit zunehmender Verbindung von Filterkopf (4) mit Filtertopf (2) den vorrangig in vertikaler Richtung wirkenden Lager-Dichtring (40) gegen eine weitere Abstützfläche (44) derart anlegt, dass dieser Dichtring (40) sich in radialer Richtung gesehen verbreitert.

5. Filtervorrichtung nach Anspruch 4, **dadurch gekennzeichnet, dass** die weitere Abstützfläche (44) für den zur Bildung des zweiten Loslagers (38) eingesetzten Lager-Dichtring (40) Bestandteil des Filtertopfes (2) ist.

6. Filtervorrichtung nach Anspruch 4 oder 5, **dadurch gekennzeichnet, dass** die eine Abstützfläche (42) einen geschlossenen Außenumfangsring (46) ausbildet, der über Verbindungsstege (48) mit den sonstigen Teilen der Endkappe (22) verbunden ist und der außenumfangsseitig einen Absatz (50) oberhalb des zweiten Loslagers (38) aufweist.

7. Filtervorrichtung nach einem der vorstehenden Ansprüche, **dadurch gekennzeichnet, dass** der das erste Loslager (32) mit bildende Dichtring (36) in einer Umfangsnut (34) eines zylindrischen Fortsatzes (24) der Endkappe (22) angeordnet ist, die die Anschluss-Stelle begrenzt, so dass der Dichtring (36) in Anlage mit einem zylindrischen Anschlussteil (28) des Filterkopfes (4) bringbar ist.

8. Filtervorrichtung nach einem der vorstehenden Ansprüche, **dadurch gekennzeichnet, dass** der Durchmesser des Dichtringes (36), der das erste Loslager (32) mit ausbildet, kleiner ist als der Durchmesser des Dichtringes (40), der das zweite Loslager (38) mit ausbildet, und dass beide Lager (32, 38) in axialer Richtung derart voneinander beabstandet sind, dass das Filterelement (16) im Wesentlichen vibrationsfrei im Filtergehäuse (2, 4) gelagert ist.

## Claims

1. Filter device, with a filter housing (2, 4) which holds a filter element (16) that separates a feed chamber (26) from a filtrate chamber (20) within the filter housing (2, 4), wherein the filter element (16) is sealed with respect to the filter housing (2, 4) by means of a sealing device (36, 40), wherein the filter element (16) is mounted inside the filter housing (2, 4) exclusively by means of floating bearings (32, 38), the bearing (32, 38) in each case having a sealing ring (36, 40) of the sealing device, and wherein the sealing ring (36), which helps to form the first floating bearing (32), is arranged between a connection point (24) of the filter element (16) and a head (4) of the filter housing (2, 4), **characterised in that** the sealing ring (40), which helps to form the second floating bearing (38), is arranged between the said filter head (4) and a filter bowl (2) of the filter housing (2, 4).

2. Filter device according to claim 1, **characterised in that** the bearings (32, 38) act primarily in mutually perpendicular directions and **in that** a first floating bearing (32) acts primarily in the horizontal, radial direction during operation of the device and a second floating bearing (38) acts in the vertical, axial direction.

3. Filter device according to claim 1 or 2, **characterised in that** the sealing ring (36, 40) helping to form the respective bearing (32, 38) is elastically flexible, preferably consists of an elastomer material.

4. Filter device according to one of the preceding claims, **characterised in that** the one end cap (22) of the filter element (16) which forms the connection point (24) has a support surface (42) overlapping the filter bowl (2) which, with increasing connection of filter head (4) to filter bowl (2), places the bearing sealing ring (40), which acts primarily in the vertical direction, in contact against a further support surface (44) in such a manner that this sealing ring (40) spreads when viewed in the radial direction.

5. Filter device according to claim 4, **characterised in that** the further support surface (44) for the bearing sealing ring (40) used to form the second floating bearing (38) is part of the filter bowl (2).

6. Filter device according to claim 4 or 5, **characterised in that** the one support surface (42) forms a closed outer circumferential ring (46) which is connected to the other parts of the end cap (22) via connecting webs (48) and which on the outer circumference has a shoulder (50) above the second floating bearing (38).

7. Filter device according to one of the preceding claims, **characterised in that** the sealing ring (36) helping to form the first floating bearing (32) is arranged in a circumferential groove (34) of a cylindrical extension (24) of the end cap (22), which limits the connection point such that the sealing ring (36) can be brought into abutment with a cylindrical connection part (28) of the filter head (4).

8. Filter device according to one of the preceding claims, **characterised in that** the diameter of the sealing ring (36) which helps to form the first floating bearing (32) is smaller than the diameter of the sealing ring (40) which helps to form the second floating bearing (38), and **in that** both bearings (32, 38) are spaced apart from each other in the axial direction in such a manner that the filter element (16) is mounted in the filter housing (2, 4) substantially vibration-free.

## Revendications

1. Dispositif de filtration, comprenant une enveloppe (2, 4) de filtre, qui reçoit un élément (16) filtrant, séparant, à l'intérieur de l'enveloppe (2, 4) de filtre, un espace (26) pour du non filtrat d'un espace (20) pour du filtrat, l'élément (16) filtrant étant rendu étanche par rapport à l'enveloppe (2, 4) du filtre, au moyen d'un dispositif (36, 40) d'étanchéité, l'élément (16) filtrant étant monté à l'intérieur de l'enveloppe (2, 4) du filtre, exclusivement au moyen de paliers (32, 38) libres, le palier (32, 38) respectif ayant un joint (36, 40) du dispositif d'étanchéité et dans lequel le joint (36), qui contribue à former le premier palier (32) libre, est disposé entre un point (24) de raccord de l'élément (16) filtrant et une tête (4) de l'enveloppe (2, 4) du filtre, **caractérisé en ce que** le joint (40), qui contribue à former le deuxième palier (38) libre, est disposé entre ladite tête (4) de filtre et un pot (2) de l'enveloppe (2, 4) du filtre.

2. Dispositif de filtration suivant la revendication 1, **caractérisé en ce que** les paliers (32, 38) agissent prioritairement dans des directions perpendiculaires entre elles et **en ce qu'**un premier palier (32) libre agit, lorsque le dispositif est en fonctionnement, prioritairement dans la direction radiale horizontale, et un deuxième palier (38) libre dans la direction axiale verticale.

3. Dispositif de filtration suivant la revendication 1 ou 2, **caractérisé en ce que** le joint (36, 40) respectif, contribuant à la constitution du palier (32, 38), cède élastiquement en étant de préférence en une matière élastomère.

4. Dispositif de filtration suivant l'une des revendications précédentes, **caractérisé en ce que** la une coiffe (22) d'extrémité de l'élément ((16) filtrant, qui forme le point (24) de raccord, a une surface (42) d'appui, chevauchant le pot (2) et appliquant, avec une liaison croissante de la tête (4) au pot (2), le joint (40) de palier agissant prioritairement dans la direction verticale, sur une autre surface (44) d'appui, de manière à ce que ce joint (40) s'élargisse, considéré dans la direction radiale.

5. Dispositif de filtration suivant la revendication 4, **caractérisé en ce que** l'autre surface (44) d'appui du joint (40) de palier utilisé pour former le deuxième palier (38) libre est une partie constitutive du pot (2).

6. Dispositif de filtration suivant la revendication 4 ou 5, **caractérisé en ce que** la une surface (42) d'appui constitue un anneau (46) périphérique extérieur fermé, qui est relié, par des entretoises (48) de liaison, aux autres parties de la coiffe (22) d'extrémité et qui a, du côté du pourtour extérieur, un ressaut (50) au-dessus du deuxième palier (38) libre.

7. Dispositif de filtration suivant l'une des revendications précédentes, **caractérisé en ce que** le joint (36), contribuant à former le premier palier (32) libre, est disposé dans une rainure (34) de pourtour d'un prolongement (34) cylindrique de la coiffe (22) d'extrémité, qui délimite le point de raccord, de sorte que le joint (36) peut être mis en contact avec une partie (28) cylindrique de raccord de la tête (4).

8. Dispositif de filtration suivant l'une des revendications précédentes, **caractérisé en ce que** le diamètre du joint (36), qui contribue à constituer le premier palier (32) libre, est plus petit que le diamètre du joint (40), qui contribue à constituer le deuxième palier (38) libre, et **en ce que** les deux paliers (32, 38) sont à distance l'un de l'autre dans la direction axiale, de manière à ce que l'élément (16) filtrant soit monté sensiblement sans vibration dans l'enveloppe (2, 4) du filtre.
